# EUROPÄISCHE PATENTSCHRIFT

(11) **EP 0 846 306 B1**
(45) Veröffentlichungstag und Bekanntmachung des Hinweises auf die Patenterteilung: **27.11.2002**
(21) Anmeldenummer: 97929262.0
(22) Anmeldetag: 23.06.1997
(51) Int. Cl.: G06K 9/62

(54) **VERFAHREN ZUR BERECHNUNG UND/ODER ANALYSE UND/ODER ERKENNUNG EINES KOMPLEXEN SYSTEMS**
METHOD OF CALCULATING AND/OR ANALYSING AND/OR DETECTING A COMPLEX SYSTEM
PROCEDE POUR LE CALCUL ET/OU L'ANALYSE ET/OU LA DETECTION D'UN SYSTEME COMPLEXE

(30) Priorität: 27.06.1996 DE 19625906
(43) Veröffentlichungstag der Anmeldung: 10.06.1998
(73) Patentinhaber: Definiens AG., 80331 München (DE); International Business Machines Corporation, Armonk, NY 10504 (US)
(72) Erfinder: BINNIG, Gerd, CH-8832 Wollerau (CH)
(74) Vertreter: Winter, Brandl, Fürniss, Hübner, Röss, Kaiser, Polte Partnerschaft
(86) Internationale Anmeldenummer: EP9703281
(87) Internationale Veröffentlichungsnummer: WO98002845

(56) Entgegenhaltungen:
- LU H Q ET AL: "APPLYING PERCEPTUAL ORGANIZATION TO THE DETECTION OF MAN-MADE OBJECTS IN NON-UBAN SCENES" PATTERN RECOGNITION, Bd. 25, Nr. 8, 1.August 1992, Seiten 835-853, XP000306312
- P CARIANI: "Emergence and artificial life" ARTIFICIAL LIFE II, XP002040881
- J. P. MORELAND: "Complementarity, agency theory and the God-of-the-gaps" PERSPECTIVES ON SCIENCE AND THE CHRISTIAN FAITH, JOURNAL OF THE AMERICAN SCIENTIFIC AFFILIATION, Bd. 49, Nr. 1, März 1997, Seiten 2-14, XP002040880
- KIM K ET AL: "ADAPTIVE PARAMETRIC ESTIMATION AND CLASSIFICATION OF REMOTELY SENSED IMAGERY USING A PYRAMID STRUCTURE" IEEE TRANSACTIONS ON GEOSCIENCE AND REMOTE SENSING, Bd. 29, Nr. 4, Seiten 481-493, XP000258527
- BAJCSY R ET AL: "A computer recognition of bridges, islands, rivers and lakes from satellite pictures" CONFERENCE ON MACHINE PROCESSING OF REMOTELY SENSED DATA, WEST LAFAYETTE, IN, USA, 16-18 OCT. 1973, 1973, NEW YORK, NY, USA, IEEE, USA, Seiten 2A/54-68, XP002040882

## Beschreibung

Verfahren zur Berechnung und/oder Analyse und/oder Erkennung eines komplexen Systems

Die vorliegende Erfindung bezieht sich auf ein Verfahren zur Berechnung und/oder Analyse und/oder Erkennung von Objekten eines Komplexen Systems, das aus einer Vielzahl miteinander in Wechselwirkung stehender und/oder voneinander abhängiger Objekte besteht.

In sehr komplexen Systemen, mit deren Berechnung, Analyse oder Erkennung sich die vorliegende Erfindung befaßt, ist die Anzahl der jeweils miteinander verschalteten, in Wechselwirkung befindlichen oder voneinander abhängigen Objekten in der Regel extrem groß. So besteht beispielsweise ein bezüglich seiner jeweiligen Muster zu untersuchendes Bild aus mindestens einer Million Bildpunkten (welche demgemäß die "Einzelobjekte" des Bilds darstellen), die jeweils mit ihren Nachbarbildpunkten verknüpft sind. Im Falle des menschlichen Gehirns handelt es sich bei den direkt oder indirekt miteinander verknüpften Objekten demgegenüber bereits um mehrere Milliarden Neuronen. Auch das Netzwerk "Menschheit" kann als milliardengroßes Heer einzelner Menschen betrachtet werden, die in verschiedenster Weise miteinander in Beziehung stehen.

Im Stand der Technik werden komplexe Systeme dieser Art meist "makroskopisch", d.h. mit Hilfe statistischer Methoden berechnet. Ein anderes herkömmliches Verfahren ist die sogenannte "mikroskopische" Betrachtungsweise, bei der jedes einzelne Objekt des komplexen Systems jeweils für sich in der Wechselwirkung mit (ggfs. allen) anderen Objekten betrachtet wird.

Ein Beispiel für eine mikroskopische Betrachtungsweise ist in LU H Q ET AL: 'APPLYING PERCEPTUAL ORGANIZATION TO THE DETECTION OF MAN-MADE OBJECTS IN NON-URBANN SCENES' PATTERN RECOGNITION, Bd. 25, Nr. 8, 1.August 1992, Seiten 835-853 zu finden. Dort wird ein Verfahren zur Erkennung von großen, vom Menschen gefertigten Objekten in einem nicht-städtischen Gebiet vorgestellt. Um vom Menschen gefertigte Objekte erkennen zu können, müssen geometrische Strukturen mit einer vorgegebenen Regelmäßigkeit und vorgegebenen Beziehungen zwischen den einzelnen Strukturen aus einem Bild extrahiert werden. Das bekannte Verfahren enthält so drei Phasen: (1) Extraktion von Basisobjekten; (2) Auffinden von Regelmäßigkeiten und Beziehungen zwischen den Basisobjekten; und (3) Identifizierung der Region, die von den Basisobjekten eingenommen wird.

Neuronale Netzwerke werden derzeit meist mit Hilfe des genannten mikroskopischen Verfahrens berechnet, und zwar indem zu Beginn alle möglichen Verbindungen von jedem Neuron zu jedem anderen Neuron zugelassen werden, wobei das sich ergebende Netzwerk anschließend nach bestimmten Algorithmen trainiert wird. Hierbei wird ein Teil der Verbindungen verstärkt, während ein anderer Teil abgeschwächt wird. Allerdings ist man derzeit nicht in der Lage, mit Hilfe dieses Verfahrens wirklich komplexe Netzwerke zu berechnen, da die Anzahl der Wechselwirkungen "W" mit der Anzahl der Objekte "N" etwa quadratisch zunimmt: W = (N -1) · N. Dies bedeutet, daß man für 10¹⁰ Neuronen ca. 10²⁰ Wechselwirkungen berechnen müßte, was derzeit selbst mit Hochleistungsrechnern in akzeptabler Zeitdauer völlig unmöglich ist.

Ein weiteres Beispiel eines komplexen Systems stellt eine Verkehrssimulation dar. Auch im Falle einer solchen Verkehrssimulation wurden bereits Versuche unternommen, eine mikroskopische Berechnung durchzuführen, indem jedes einzelne Fahrzeug individuell mit seinen Wechselwirkungen zu den benachbarten Fahrzeugen und zur Straße untersucht wird. Allerdings wurden bei Verkehrssimulationen auch statistische bzw. makroskopische Verfahren eingesetzt, bei denen, wie auch bei der Untersuchung von Gasen, auf die individuelle Bewegung der einzelnen Objekte (Fahrzeuge bzw. Gasmoleküle) nicht näher eingegangen wird. Ganz allgemein läßt sich sagen, daß mit dem mikroskopischen Ansatz nur relativ kleine Systeme behandelt werden können, wohingegen der sta-tistische Ansatz den Nachteil hat, daß lediglich grobe und pauschale Aussagen getroffen werden können.

Gleichwohl lassen sich statistische Verfahren sehr erfolgreich zur Beschreibung sogenannter "makroskopischer Eigenschaften" einsetzen. So führt z.B. die statistische Beschreibung der Bewegung von Atomen oder Molekülen (oder auch von Fahrzeugen im Straßenverkehr) zu den bekannten Gasgleichungen mit (mathematischen) Aussagen über Druck, Temperatur, Dichte und Strömungsgeschwindigkeit (bzw. im Straßenverkehr zu entsprechenden Aussagen über Verkehrsflüsse und -dichten). Um Aussagen über komplexe Zusammenhänge machen zu können, sind diese statistischen Verfahren jedoch ungeeignet, da sie nicht der geschachtelten Struktur komplexer Systeme gerecht werden, so daß wichtige Informationen verloren gehen. So bringen statistische Aussagen über die Bewegungen der Atome in lebenden Organismen kaum eine Erkenntnis über die Funktionsweise der Organismen; in gleicher Weise kann der tatsächlich auftretende Straßenverkehr in einer Stadt statistisch nicht beschrieben werden. Dennoch ist es mit statistischen Verfahren möglich, Informationen in bestimmter Weise zu bündeln: Sehr viele Daten (wie beispielsweise die Bewegung von vielen Objekten) werden auf einige wenige wesentliche Daten (wie z.B. Druck und Temperatur) reduziert.

Zusammenfassend sei noch einmal festgehalten, daß keines der bislang bekannten Verfahren, und zwar insbesondere auch die "mikroskopischen" und "makroskopischen" Betrachtungsweisen, in der Lage sind, komplexe Systeme mit hinreichender Genauigkeit und akzeptabler Geschwindigkeit zu berechnen, zu analysieren oder zu erkennen.

Der Erfindung liegt daher die Aufgabe zugrunde, ein Verfahren anzugeben, mit dem es möglich ist, komplexe Systeme mit hoher Genauigkeit und akzeptabler Geschwindigkeit zu berechnen, zu analysieren oder zu erkennen.

Diese Aufgabe wird erfindungsgemäß mit den im Kennzeichnungsteil des Anspruchs 1 angegebenen Verfahrensschritten gelöst.

Mit dem erfindungsgemäßen Verfahren ist es möglich, die Anzahl der zu berechnenden Wechselwirkungen oder Abhängigkeiten in komplexen Strukturen bzw. Systemen in starkem Maße zu reduzieren, ohne daß dadurch wesentliche Ungenauigkeiten eingeführt werden. Dadurch, daß die Anzahl der zu berechnenden Wechselwirkungen im Vergleich zu herkömmlichen Verfahren stark verringert wird, wird auch der erforderliche Rechenaufwand und damit die benötigte Rechenzeit entsprechend herabgesetzt. Das erfindungsgemäße Verfahren ist daher auch mit den derzeit verfügbaren Rechnern in einer akzeptablen Zeitspanne durchführbar.

Vorteilhafte Weiterbildungen der Erfindung sind Gegenstand der Unteransprüche.

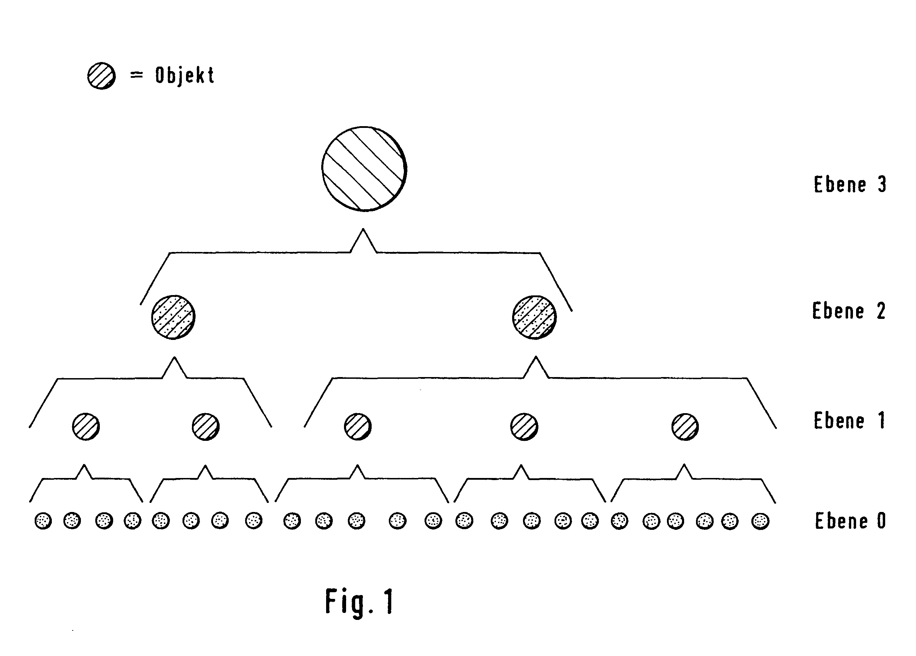

Zum besseren Verständnis der Erfindung werden nachfolgend die wesentlichen Gesichtspunkte der im Anspruch 1 unter Schutz gestellten Verfahrensschritte unter Bezugnahme auf die Fig. 1 bis 4 näher erläutert. Zunächst werden zu diesem Zweck die der Erfindung zugrunde liegenden Erkenntnisse beschrieben.

Das erfindungsgemäße Verfahren könnte vereinfacht als eine "fraktal-hierarchische Bündelung oder Statistik mit fraktal-hierarchischen Randbedingungen" bezeichnet werden. Ein wesentlicher Gesichtspunkt liegt darin, daß dieses Verfahren auf jegliche Art komplexer Systeme angewandt werden kann; so liegt ein Anwendungsbereich im technologischen, soziologischen, psychologischen, ökologischen, ökonomischen, biologischen, chemischen, physikalischen oder ähnlich gearteten Anwendungsgebieten.

Das erfindungsgemäße Verfahren stellt gleichsam einen Kompromiß zwischen der "mikroskopischen" und der "makroskopischen" Beschreibung von sehr großen komplexen Systemen dar. Da die Wechselwirkungen in komplexen Systemen nicht homogen sind, können Gruppierungen, also auch "Bündelungen", tatsächlich vorgenommen werden. In einem "einfachen" System wie z.B. einem mit Edelgas gefüllten Volumen kann man keine besondere Gruppierung feststellen. In lebenden Organismen hingegen sind die Atome in funktionellen Einheiten wie z.B. den Eiweißmolekülen gruppiert. Die Gruppierung weist eine hierarchische Struktur auf, da die Moleküle Funktionen aufweisen, die nur Teilfunktionen von übergeordneten Funktionen sind. Darüber hinaus ist es möglich, innerhalb des Eiweißmoleküls Gruppierungen von Atomen zu finden, die Unterfunktionen repräsentieren. Es ist in komplexen Zusammenhängen immer eine gestaffelte Bündelung zu immer neuen Funktionen auf einer größeren Skala zu beobachten. Die Bündelung ist ein Vorgang, der geschachtelt auf unterschiedlichen Skalen stattfindet. Ein erster Aspekt der vorliegenden Erfindung liegt daher in der Maßnahme, solche Systeme zum Teil mit fraktalen Algorithmen zu behandeln.

Verfahren und Algorithmen, die zur Beschreibung eines Systems auf unterschiedlichen Skalen - im kleinen wie auch im großen Maßstab - eingesetzt werden können, werden fraktale Methoden und Algorithmen genannt. Fraktale Methoden wurden bisher nicht besonders behandelt, da man sich in Bezug auf Fraktale bisher auf streng mathematisch faßbare Vorgehensweisen beschränkte. Fraktale Algorithmen sind mathematisch wohl definierbar. Bisher wurden sie jedoch im wesentlichen auf räumlich (wie z.B. eine Küstenlinie oder Wolke) oder zeitlich (wie z.B. Aktienkurse) geometrische Strukturen angewandt. Ein zweiter Aspekt der vorliegenden Erfindung liegt somit in der Erkenntnis, daß mit Hilfe fraktaler Algorithmen auch Prozesse und Interaktionen repräsentiert werden können. Die Algorithmen müssen dabei nicht exakt gleich, sondern nur ähnlich sein.

Nachfolgend wird der im Anspruch 1 angegebene Verfahrensschritt [a] unter Bezugnahme auf Fig. 1 näher erläutert:

Zu Beginn wird das zu berechnende System in Gruppen, Untergruppen, Unteruntergruppen usw. sowie in hierarchische Ebenen zergliedert. D.h., es wird die in Fig. 1 gezeigte Startstruktur gebildet, in der im wesentlichen sämtliche Objekte des Systems eine unterste Hierarchieebene (Ebene 0) darstellen und in der eine jeweils höhere Hierarchieebene (nämlich im Falle der Fig. 1 eine der Ebenen 1 bis 3) durch solche Objekte gebildet wird, die durch geeignete Gruppierung mehrerer Objekte der jeweils niedrigeren Hierarchieebene erhalten werden.

Dies ist bereits eine fraktale Vorgehensweise, da sie auf unterschiedlichen Skalen in ähnlicher Weise stattfindet. Die Über- oder Unter-Gruppen werden wie Objekte behandelt. Dies kann nach Gutdünken oder - was meist besser ist - bereits mittels eines geeigneten Algorithmus geschehen. Dieser Algorithmus ist möglicherweise fraktal, da er für die Über- und Unter-Gruppen sehr ähnlich sein kann.

Auf der untersten hierarchischen Ebene (also der Ebene 0) werden alle relevanten mikroskopischen Objekte aufgeführt. Deren Anzahl sei gleich n0. Je nach Intensität und Relevanz der Wechselwirkungen werden n1 Gruppen gebildet. Diese n1 Gruppen erscheinen auf der nächst höheren Hierarchieebene als n1 Objekte. Der äquivalente Vorgang wird entsprechend auf den höheren Hierarchieebenen wiederholt. Also werden die n1 Objekte gemäß ihren Wechselwirkungen auf der ersten Ebene gruppiert und ergeben n2 Objekte auf der zweiten Ebene. Auf den nächsten Ebenen wird entsprechend verfahren, bis die oberste Ebene (im Falle der Fig. 1 die Ebene 3) mit nur einem Objekt erreicht ist. Man erhält dann mehrere Hierarchieebenen mit insgesamt n0 + n1 + n2 + ... Objekten. Die Anzahl der Gruppenmitglieder mOi ist in der Regel deutlich kleiner als n0 und kann im Extremfall bei manchen Gruppen auch 1 sein.

Es ist alternativ auch möglich, den beschriebenen Vorgang auch in umgekehrter Reihenfolge, also von oben nach unten, ablaufen zu lassen. In diesem Fall wird das Gesamtsystem in Untergruppen zerteilt, die dann wiederholt in Untergruppen zerlegt werden. Mit anderen Worten, die Startstruktur im Schritt [a] des Anspruchs 1 wird gebildet, indem das zu berechnende komplexe System in Untergruppen zerlegt wird, die die zweit höchste Hierarchieebene bilden, wobei die so entstandenen Objekte wiederum in Untergruppen einer niedrigeren Hierarchieebene zerlegt werden, usw.

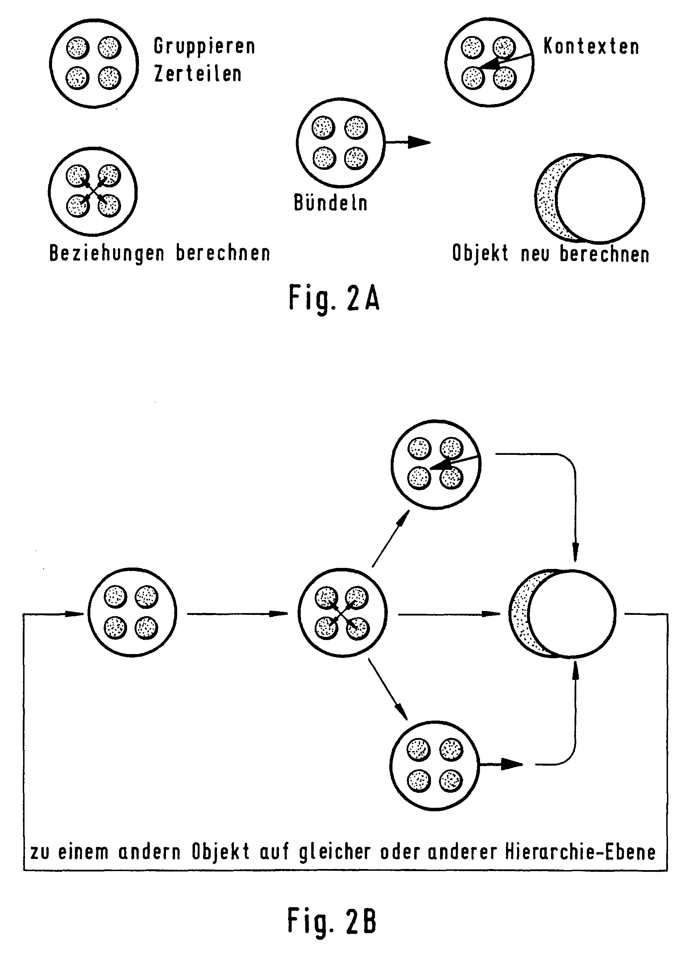

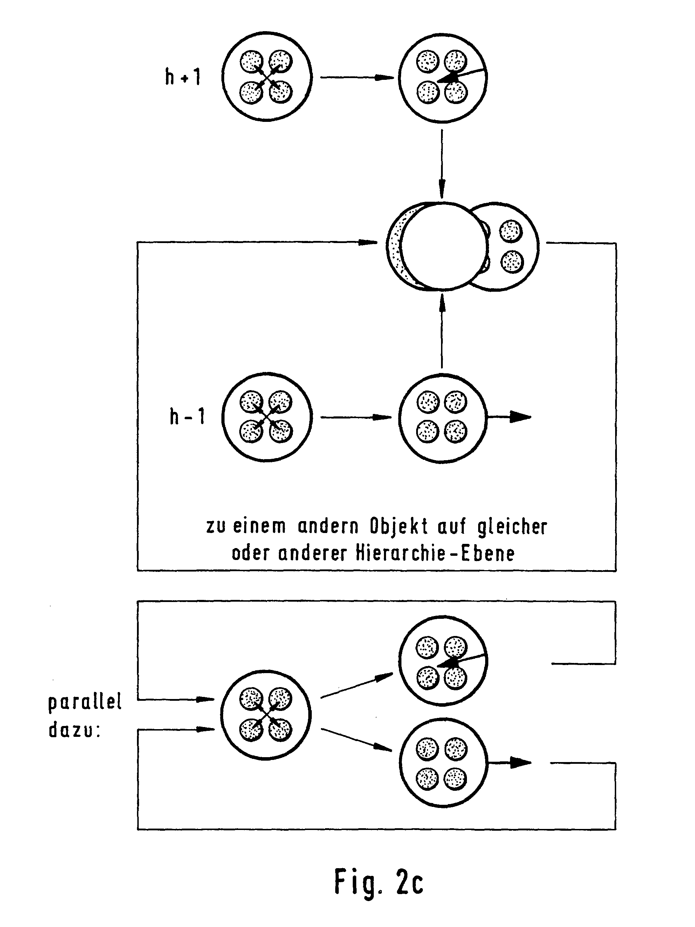

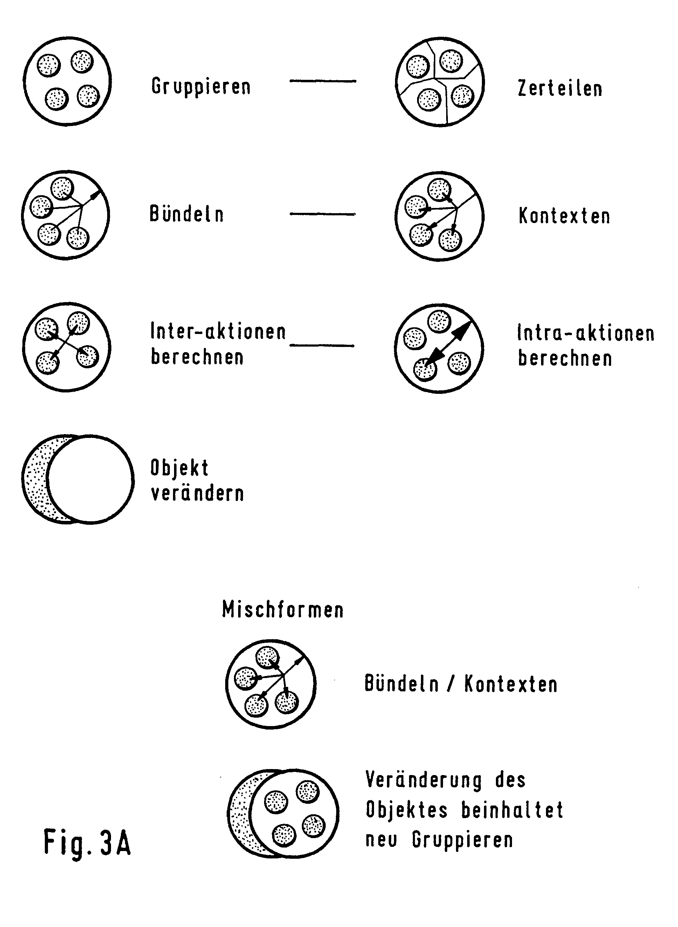

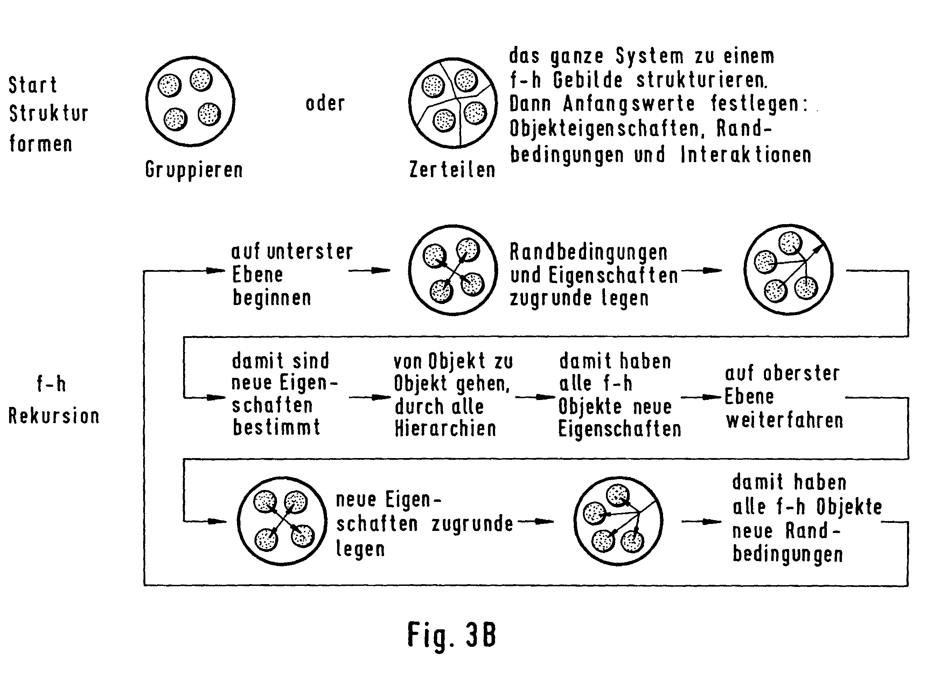

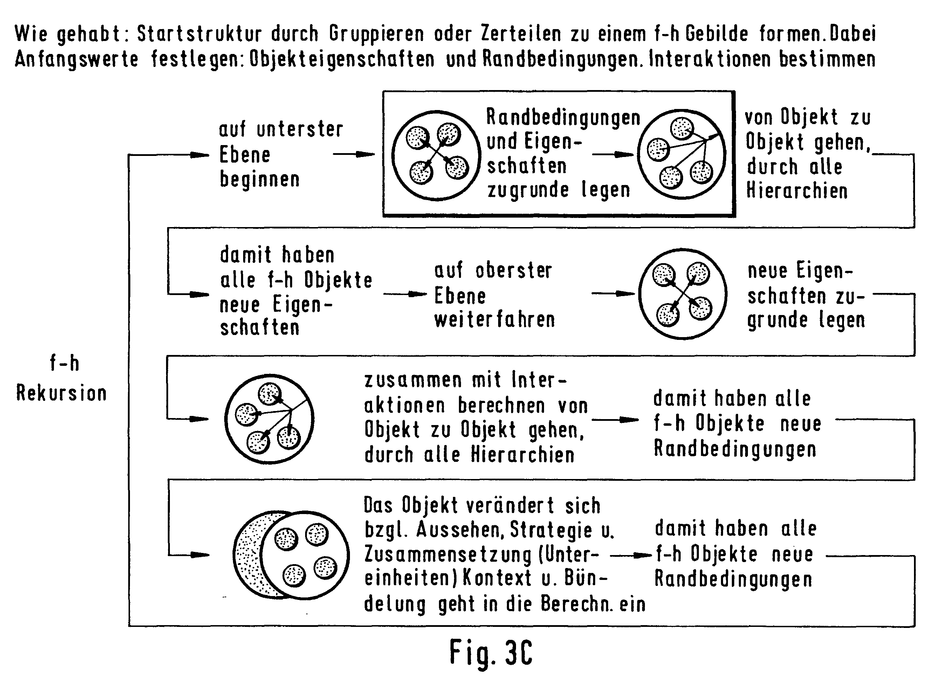

Nachfolgend wird der im Anspruch 1 angegebene Verfahrensschritt [b1] näher erläutert (es sei angemerkt, daß das Wesen dieses Verfahrensschritts ebenso wie das der weiteren Verfahrensschritte aus den Diagrammen der Fig.2 und 3 noch deutlicher hervorgeht, so das auf diese ebenfalls verwiesen werden darf):

Im zweiten Verfahrensschritt [b1] werden nur die Interaktionen, Wechselwirkungen und Abhängigkeiten innerhalb der Gruppen berechnet. Dies sind jeweils mOi*(m0i-1) Wechselwirkungen, also zusammen genommen (d.h. über alle i summiert) wesentlich weniger als n0*(n0-1); folglich sind diese Wechselwirkungen auch noch für große Systeme in akzeptabler Zeit berechenbar.

Der im Anspruch 1 angegebene nächste Verfahrensschritt [b2] dient dazu, aus den berechneten Wechselwirkungen eine oder mehrere Eigenschaften, die für die nächst höhere Skala oder Hierarchieebene relevant ist bzw. sind, zu abstrahieren. Dieses Abstrahieren oder Extrahieren wird in der Terminologie der vorliegenden Erfindung nachfolgend als "Bündelung" oder "Bündeln" bezeichnet.

In der Regel wird das Verhalten einer jeweiligen Gruppe einfacher zu beschreiben sein als die Summe aller Wechselwirkungen ihrer Mitglieder. Oft lassen sich bestimmte Verhaltensweisen der Gruppen durch einige wenige statistische Kenngrößen beschreiben. Hierbei kann es sich z.B. um eine Anzahl oder um den Mittelwert einer oder mehrerer Größen handeln; alternativ kann es aber auch eine Funktion sein. Anstelle rein statistischer Bündelungsverfahren können für die Zwecke der Erfindung alternativ noch weitere Verfahren eingesetzt werden: so kann z.B. das Wechselspiel von vielen Einheiten mit bestimmten Funktionen zu einer neuen Einheit mit einer neuen Gesamtfunktion führen, die einfacher zu beschreiben ist als die Summe aller Einzelfunktionen.

Ein Beispiel (von äußerst vielen) sind die bekannten Operationsverstärker, die mit wenigen Kennzahlen in ihrer Funktion bzw. Wirkungsweise beschreibbar sind, wohingegen ihr jeweiliger Aufbau aus Unterobjekten in der Regel relativ komplex ist .

Die Bündelung muß so gewählt werden, daß sie die relevanten Eigenschaften der Gruppe repräsentiert. Der Bündelungsvorgang wird auf jeder Skala wiederholt, wobei man sich hierbei vorzugsweise in der Hierarchie von unten nach oben, also von einer kleinen zu einer jeweils größeren Skala bewegt. Dies ist eine fraktale Vorgehensweise, wobei der Algorithmus, mittels dem gebündelt wird, zusätzlich fraktal sein kann.

Der im Anspruch 1 angegebene nächste Verfahrensschritt [b3] dient dazu, aus den berechneten Eigenschaften des übergeordneten Objektes Randbedingungen für jedes Objekt einer Gruppe zu berechnen. Dieser Vorgang wird in der Terminologie der vorliegenden Erfindung nachfolgend als "Kontexten" bezeichnet.

Wie bereits erläutert wurde, werden die Eigenschaften der Objekte (bzw. Gruppen) durch gestaffeltes statistisches Bündeln von unten nach oben berechnet. Das Gesamtsystem (also das Objekt auf der obersten Ebene) steht im allgemeinen in einem bestimmten Zusammenhang oder Kontext und wird sich an bestimmte Randbedingungen (wie z.B. an die insgesamt zur Verfügung stehenden Ressourcen) halten müssen. Da die Objekte einer Ebene in Objekte der darüberliegenden Ebene eingebettet sind, stellen diese den Kontext für sie dar; sie erhalten somit ihre Randbedingungen von "oben". Das Bestimmen der Randbedingungen geschieht analog zum Bündeln, jedoch in umgekehrter Reihenfolge: statt statistisch gebündelt wird nach (fraktalen) Algorithmen aufgeteilt, z.B. durch Zergliederung in Unterthemen oder in immer speziellere Randbedingungen (Unter-Randbedingungen) bzw. durch Aufteilen oder Verteilen von Ressourcen. Auf welche Weise dabei aufgeteilt wird, hängt meist (in entsprechender Weise wie beim Bündeln) von den Interaktionen innerhalb einer Gruppe ab. Beim "Kontexten" wie beim Bündeln geht man fraktal vor, indem alle Hierarchieebenen (Skalen) behandelt werden. Beim Kontexten erfolgt die Bewegung durch die Hierarchieebenen vorzugsweise von oben nach unten.

Es sind auch Mischformen von fraktalem Kontexten und Bündeln möglich: Ob zuerst mit fraktalem Bündeln oder Kontexten begonnen wird, ist in vielen Fällen nicht so wichtig und hängt meist davon ab, ob die Randbedingungen oder ob die Eigenschaften besser bekannt sind. Ferner ist es möglich - wenn z.B. auf der obersten oder der untersten Stufe bzw. Hierarchieebene eine Information fehlt - auf einer mittleren Hierarchieebene beginnen, sich von der nächst höheren Hierarchieebene geschätzte oder genäherte Randbedingungen holen und schließlich aus der darunterliegen Hierarchieebene die ungefähren Eigenschaften der Unterobjekte ermitteln. Durch die Rekursion der Verfahrensschritte [c] und [d], die später noch näher beschrieben werden, werden aufgetretene Anfangsfehler schließlich beseitigt.

Es sind ferner noch Mischformen des hierarchischen Zergliederns (Schritt [a]) und des fraktalen Bündelns bzw. Aufteilens möglich: Wenn eine wesentliche Eigenschaft der Objekte ihre Zusammensetzung aus den Unterobjekten ist und diese Zusammensetzung nicht vorgegeben ist, dann muß auch sie als gebündelte Eigenschaft berechnet werden. In diesem Fall sind das Gruppieren und das Bündeln als ein Vorgang anzusehen. Auch das Kontexten kann das Zerteilen in Gruppen mit beinhalten.

Ganz allgemein ist die jeweilige Reihenfolge beim Behandeln von Objekten und beim Anwenden von Formalismen nicht so wichtig, da durch die Rekursion ohnehin jeder Formalismus auf jedes Objekt mehrfach angewandt wird. Dies wird durch entsprechende Mischformen zum Ausdruck gebracht. Je nach Problem sind manche Reihenfolgen etwas sinnvoller als andere.

Nicht immer sind hierarchische Ebenen so einfach zu definieren, wie dies vorstehend beschrieben wurde. Folgende Beispiele brechen die Symmetrie der Hierarchie (bzw. der Baumstruktur): 1) manche der Elemente oder Gruppen kommen mehrfach in unterschiedlichen Kontexten vor. Man weist ihnen dann Prozentzahlen der Zugehörigkeit zum Kontext zu. 2) Manche der Gruppen sind in mehr oder weniger hierarchische Ebenen untergliedert als ihre Nachbargruppen. So können z.B. zwei Firmen, die miteinander zur selben Unternehmensgruppe gehören und evtl. etwa gleich groß sind, dennoch unterschiedlich viele Hierarchieebenen besitzen.

Nachfolgend wird die fraktal-hierarchische Rekursion, also die Dynamik des Systems, näher erläutert.

Bei dem erfindungsgemäßen Verfahren sollen alle wesentlicheren Objekte bezüglich ihrer Wirkung und/oder ihrer Entwicklung berechnet werden. Dazu benötigt man jedoch den Kontext des Objektes und die Eigenschaften seiner Untereinheiten. Da man aber in Unkenntnis des jeweiligen Objekts weder das Kontext-Objekt (also das übergeordnete Objekt) noch die Untereinheiten berechnen kann, handelt es sich hier um ein typisches "Henne und Ei Problem". Dieses Problem wird erfindungsgemäß durch Festlegung einer Startkonfiguration und durch anschließende fraktal-hierarchische Rekursion gelöst, wobei sich die Objekte und damit die Kontexte und Eigenschaften sukzessiv von Iteration zu Iteration verändern.

Start-Struktur: In der Regel wird mit einer groben ersten fraktal-hierarchischen Gruppierung begonnen, wobei alle Objekte Start-Eigenschaften und Randbedingungen zugewiesen bekommen. Die Startgruppierung kann willkürlich vorgenommen werden oder mit Hilfe konventioneller Gruppierungs- oder Zerteilungsverfahren geschehen, wobei die Gruppen jedoch selbst wieder gruppiert bzw. die Teile wieder zerteilt werden. Die Start-Eigenschaften und Start-Randbedingungen können ebenfalls entweder willkürlich festgelegt oder mittels herkömmlicher Verfahren aus der speziellen Start-Gruppierung ermittelt werden.

Anschließend beginnt die eigentliche Berechnung des Systems. Alle fraktal-hierarchischen Objekte werden mit Hilfe von Algorithmen, die die Nachbarobjekte, die Unterobjekte und die Randbedingungen der Objekte mit einbeziehen, verändert. In diesem Zusammenhang ist es z.B. möglich, Planungs-, Vermehrungs-, Mutations-, Verformungs-, Gruppierungs- oder andere Algorithmen zu verwenden, die die jeweiligen Objekte verändern und dabei den Ist-Zustand, die Nachbarobjekte, den Kontext und/oder die Unterobjekte zugrunde legen.

Nach dieser Berechnung haben sich für die betreffenden Objekte ihre Nachbarobjekte, ihre Unterobjekte und ihre Randbedingungen geändert. Unter diesen geänderten Gegebenheiten werden die Objekte erneut berechnet. Dieser Vorgang wird rekursiv wiederholt. In welcher Reihenfolge die hierarchischen Objekte behandelt werden und die unterschiedlichen Verfahrensschritte (wie z.B. das Bündeln) angewandt werden, hängt vom jeweiligen Problem ab. Die unterschiedlichen Hierarchieebenen können unterschiedlich oft behandelt werden. In der Regel werden große Objekte (bzw. übergeordnete Objekte) seltener behandelt werden als kleine (bzw. untergeordnete) Objekte.

In vielen Fällen ist nicht nur die Entwicklung eines bestimmten Systems mit Hilfe vorgegebener Algorithmen von Interesse; vielmehr ist sehr häufig eine Optimierung eines bestimmten Systems bzw. aller (oder mancher) Objekte des Systems nach bestimmten Kriterien erwünscht. Bei einer Objekterkennung wird dies sogar immer der Fall sein, da die Erkennungsrate maximal sein soll. Im Falle von Simulationen wird demgegenüber angestrebt, lediglich bestimmte Parameter zu maximieren oder zu minimieren, wie z.B. den Umsatz oder den Gewinn einer Firma bzw. Schadstoffe in der Natur. In anderen Fällen sollen komplexere Funktionen oder Funktionsweisen bestmöglich ausgeführt werden. In diesem Fall handelt es sich um die bestmögliche Anpassung an ein (fraktal-hierarchisches, nachfolgend zum Teil mit "fraktal-hierarchisch" abgekürzt) Netzwerk von Parametern. Dies ist insbesondere der Fall bei der Objekterkennung in komplexen Zusammenhängen. Prinzipiell läuft die Objekterkennung wie eine sich selbst optimierende Simulation ab. Man benötigt dazu eine fraktal-hierarchisch-Bibliothek, an die sich die Objekte des Erkennungsverfahrens anzupassen versuchen. Zur Optimierung können genetische oder evolutionäre Algorithmen eingesetzt werden, die dann möglicherweise fraktal sind, wenn hierfür unterschiedliche Hierarchien verwendet werden.

In vielen Fällen wird eine interaktive Eingriffsmöglichkeit des Menschen von Wichtigkeit sein. Wenn man z.B. mit der Entwicklung einer Simulation nicht zufrieden ist, möchte man vielfach nur sehen, wie kritisch die Simulation auf die Veränderung von Parametern reagiert. Dies bedeutet, das der Ablauf der Simulation fortlaufend dargestellt wird, wobei die Möglichkeit besteht, die Simulation zu stoppen, um Eingriffe vorzunehmen.

Wie bereits erwähnt werden die vorstehend erläuterten Merkmale und Gesichtspunkte der Erfindung noch deutlicher aus den symbolischen Darstellungen der Fig.2A bis 2C sowie 3A bis 3C. In diesen Figuren sind in Fig.2A bzw. 3A die grundlegenden Zustände bzw. Verfahrensschritte der Erfindung (nämlich das Gruppieren, das Berechnen der Beziehungen, das Bündeln, das Kontexten sowie das rekursive Neuberechnen) mit Hilfe entsprechender Symbole dargestellt, während in den Folgefiguren 2B und 2C bzw. 3B und 3C diese Symbole verwendet sind, um mögliche Abläufe des erfindungsgemäßen Verfahrens darzustellen. Da diese Figuren im wesentlichen selbsterklärend sind, wird auf eine weitere Erläuterung dieser Figuren verzichtet.

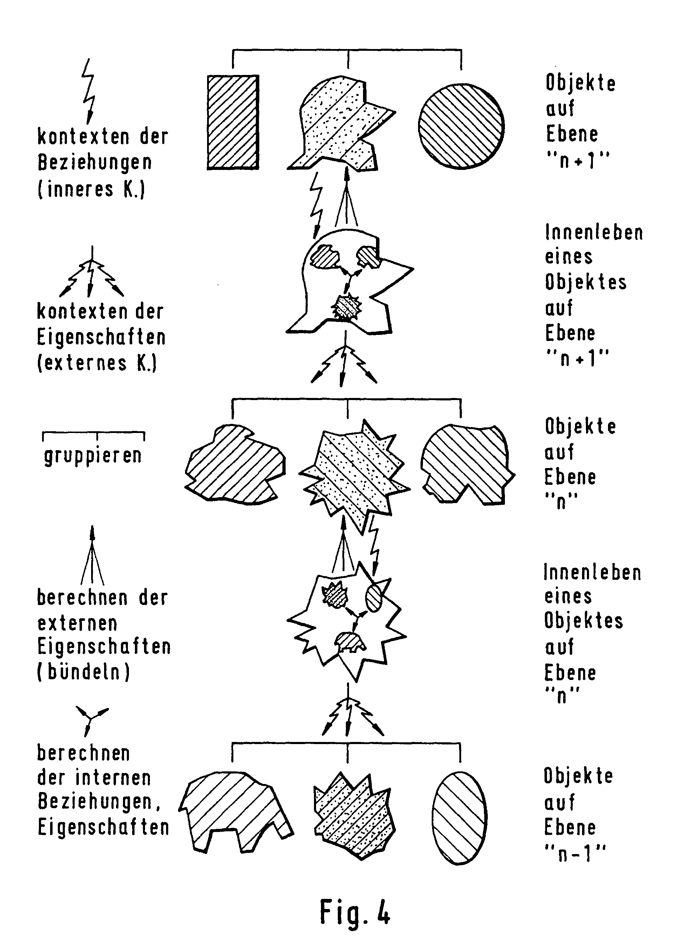

Die Erfindung wird nachstehend anhand der Beschreibung zweier Ausführungsbeispiele näher erläutert, wobei das zweite Ausführungsbeispiel zusätzlich in Fig.4 dargestellt ist.

Beim ersten Ausführungsbeispiel der Erfindung handelt es sich um eine automatische Objekterkennung und Objektidentifikation bei Satellitenbildern.

Satellitenbilder wurden bislang ausgewertet, indem die jeweils erkannten Objekte von Hand eingegeben werden. Dies erfordert in zunehmendem Maße menschliche Arbeitskraft, was bei der dramatisch wachsenden Datenflut in Zukunft weder zu bewältigen noch zu bezahlen sein wird. Das mit den Prinzipien der Erfindung durchgeführte Verfahren ist demgegenüber so intelligent, das selbsttätig Objekte erkannt werden, so daß auf jeden menschlichen Eingriff verzichtet werden kann.

### Schritt 1):

Das gesamte Satellitenbild wird auf konventionelle Weise grob in große Objekte unterteilt. Dies kann durch eine Pixelmittelung und eine anschließende Farbähnlichkeitsbestimmung geschehen. Auch die besten herkömmlichen Verfahren sind nicht in der Lage, Objekte fehlerfrei zu erkennen, geschweige denn zu identifizieren. Es werden in der Regel Teile des Objektes weggelassen oder Teile hinzugenommen, die nicht zum Objekt gehören. Dies stört im ersten Schritt des erfindungsgemäßen Verfahrens nicht weiter, da die Rekursion die Fehler später behebt. Die (fehlerhaft) gefundenen Objekte werden nun wiederum nach dem gleichen Verfahren in Unterobjekte unterteilt, die ihrerseits in Unter-Unterobjekte unterteilt werden, usw., bis die eigentliche Pixelebene erreicht ist.

Anschließend werden die Objekte in der auf diese Art gefundenen hierarchischen Baumstruktur sortiert.

### Schritt 2): Fraktal-hierarchische Bündelung (Die Interaktionen werden später berechnet, wenn die Objekte grob identifiziert sind).

Die Objekte werden durch charakteristische Kennzahlen statistischer Art beschrieben. Dies kann der mittlere Farbwert des Objektes, die Varianz des Farbwerts, das Verhältnis aus Fläche zu Randlänge, die skalenabhängige Rauhigkeit des Randes (diesbezüglich wird auf die veröffentlichten Patentanmeldungen EP-A- 0 870275 sowie EP-A- 0 843 864 der Anmelderin verwiesen), oder auch die Anzahl oder Größe der Unterobjekte sein. Dieser Vorgang wird für alle Hierarchieebenen durchgeführt.

### Schritt 3): Erstellen einer zweiten Hierarchie und einer hierarchischen Bibliothek.

Eine hierarchische Bibliothek, die für viele oder alle Satellitenbild-Erkennungsanwendungen benutzt werden kann, wird nunmehr erstellt. Dabei wird die Landschaft in grobe Gebiete, diese in feinere, usw. unterteilt. Z.B. kann man die Landschaft in besiedelte und unbesiedeite Gebiete unterteilen. Die besiedelten Gebiete werden in dünn und dicht besiedelte, wie z.B. Städte, unterteilt. Die Städte werden ihrerseits in Stadtgebiete und diese wiederum in noch feinere Objekte wie Wohnblocks und Parkanlagen unterteilt. In der hierarchischen Bibliothek kommen Objekte mehrfach vor. Ein Baum ist z.B. das Unterobjekt eines Parks, eines Straßenzugs und eines Waldes. Die Objekte der Bibliothek werden nach den gleichen Kennzahlen charakterisiert wie die Objekte im Schritt 2).

### Schritt 4): Berechnung der Start-Identifikation der Objekte.

Durch Vergleich der Kennzahlen der fraktal-hierarchischen Objekte der Bibliothek einerseits mit den Kennzahlen der fraktal-hierarchischen Objekte aus dem 1. Schritt andererseits, werden jedem Objekt aus Schritt 1) ein oder mehrere Objekte aus der Bibliothek zugeordnet. Dies kann nach Prozentzahlen der Identifikationswahrscheinlichkeit "IW" geschehen. Ein Objekt aus Schritt 1) kann dann z.B. eine 30-prozentige Wald- und eine 70-prozentige Feld-Identifikation erhalten. Damit sind die Startwerte, die Start-Kennzahlen und die Start-Identifikationsprozente festgelegt.

### Schritt 5): Rekursion.

Die aus dem Bild extrahierten Objekte werden rekursiv neu berechnet, und zwar sowohl hinsichtlich ihrer Form und damit ihrer Kennzahlen, als auch hinsichtlich ihrer jeweiligen IW.

### Schritt 5a): rekursive Berechnung der Interaktionen innerhalb einer Gruppe.

Es werden die Partnerschaftsbeziehungen der Objekte ermittelt. Dabei werden die geometrischen Positionen und Formen eine Rolle spielen. Ebenso werden die Abstände, evtl. mit Richtungen, die Größenverhältnisse sowie die geometrischen Ähnlichkeiten ermittelt.

### Schritt 5b): Rekursive Bündelung der Gruppeneigenschaften.

Die Symmetrien (wie z.B. linienförmige Anordnungen), die Anzahl (ähnlicher) Objekte in der Gruppe, die mittleren Größen ähnlicher Objekte oder die mittleren Abstände bzw. Dichten von Objekten und dgl. werden ermittelt. Alle in der Gruppe vorkommenden IW werden statistisch behandelt (z.B. wieviele gibt es von der und der Sorte?).

### Schritt 5c): Rekursives Kontexten.

Die Beziehung zwischen der Gruppe (übergeordnetes Objekt) und den Gruppenmitgliedern wird ermittelt. Wieviel Prozent der Gruppenfläche belegt das Objekt? Passen die IW's zusammen (dies entspricht z.B. der Frage, mit welcher Wahrscheinlichkeit ein Flughafen ein Unterobjekt einer Stadt sein kann). Die Informationen über die Kontexte der Objekte innerhalb der Bibliothek sind ebenfalls Bestandteil der Bibliothek und werden zum Vergleich herangezogen.

### Schritt 5d): Rekursives Neuberechnen und Gruppieren der Objekte.

Jedes Objekt wird rekursiv bezüglich seiner Zusammensetzung und seiner IW neu berechnet. Dabei werden die Ergebnisse der Bündelung, des Kontextens und der Interaktionsberechnungen mit einbezogen. Wenn ein Objekt mit mehreren IW's bezüglich seines Kontextes besser zu einer der beiden Identifikationsmöglichkeiten paßt, so erhöht sich die entsprechende IW.

Die Randobjekte eines jeden Überobjekts werden neu gruppiert, je nachdem ob sie besser zum benachbarten Überobjekt passen oder nicht. Diese Veränderung verlangt eine Neuberechnung der IW's und der Operationen a), b) und c).

Nachstehend wird das zweite Ausführungsbeispiel unter Bezugnahme auf Fig. 4 näher erläutert. Dieses Ausführungsbeispiel zeichnet sich dadurch aus, daß durch Einführen von internen und externen Eigenschaften bzw. internen und externen Kontexten (Randbedingungen) eine deutliche Vereinfachung erzielt wird.

START: Gestartet wird, indem eine vorläufige fraktal-hierarchische Objektstruktur formt. In dieser Objektstruktur sind Gruppen zu neuen Objekten zusammengefaßt. Jedes Objekt hat eine Identität. Diese Identität besteht aus interner und externer fraktal-hierarchischer Identität. Die interne Identität besteht aus interner Eigenschaft und in fernem Kontext. Die externe Identität besteht aus externer Eigenschaft und externem Kontext. Nach dem Festlegen der Startkonfiguration werden die Identitäten der fraktal-hierarchischen Objekte iterativ und rekursiv neu berechnet.

Das Berechnen der Identität geschieht im einzelnen wie folgt:

Rekursion: Hierzu müssen die internen und externen Eigenschaften des Objektes neu berechnet werden.
Interne Eigenschaften: Interne Eigenschaften werden berechnet aus dem internen Beziehungsnetzwerk der Unterobjekte mit deren Eigenschaften im internen Kontext.
Externe Eigenschaften: Externe Eigenschaften werden berechnet durch Bündeln im externen Kontext.
Interner Kontext: Der interne Kontext ist die Randbedingung für die internen Beziehungen der Unterobjekte und wird berechnet aus dem externen Kontext der Objekte und deren externen Eigenschaften.
Externer Kontext: Der externe Kontext ist die Randbedingung zur Berechnung der externen Eigenschaft (Bündelung) und wird berechnet aus dem internen Beziehungsnetz des Überobjektes und dessen internem Kontext.

Zum besseren Verständnis sei noch auf folgendes hingewiesen: Interne Eigenschaften eines Objektes sind nicht identisch mit den externen Eigenschaften der Unterobjekte. Die internen Eigenschaften bestehen aus externen Eigenschaften der Unterobjekte und dem Beziehungsnetzwerk der Unterobjekte im internen Kontext. Der interne Kontext ist nicht identisch mit dem externen Kontext der Unterobjekte.

Die Berechnung der internen Beziehungen (zum Teil auch das Bündeln) entsprechen einer konventionellen Simulation und werden auch bei dem beschriebenen erfindungsgemäßen Verfahren so ausgeführt.

Zusätzlicher Punkt: Beim Berechnen der Identität eines Objektes können auch Algorithmen gestartet werden, die neu-bzw. umgruppieren. Es können sogar Algorithmen aufgerufen werden, die die Algorithmen, nach denen gebündelt und gekontextet wird, jeweils neu bestimmen.

Die Identität der Objekte ist durch folgende Kriterien gegeben:
- gebündelte Eigenschaft (externe Eigenschaft);
- internes Beziehungsnetzwerk der Unterobjekte (interne Eigenschaft);
- externer, interner Kontext;
- Algorithmen zum internen und externen Kontexten und zur internen und externen Eigenschaftsbestimmung;
- Algorithmen zum Umgruppieren;
- Algorithmen zum Ändern der Algorithmen.

Durch seine Identität gibt das Objekt über seine externen Eigenschaften einen Input nach oben, damit die innere und außere Identität des Überobjektes neu berechnet werden kann. Nach unten gibt das Objekt über das interne Kontexten und auch über das interne Gruppieren seinen Input zur Berechnung der Identität der Unterobjekte ab.

## Patentansprüche

1. Verfahren zur Berechnung und/oder Analyse und/oder Erkennung von Objekten eines komplexen Systems, das aus einer Vielzahl miteinander in Wechselwirkung stehender und/oder voneinander abhängiger Basisobjekte besteht,
welches *folgende Schritte aufweist*:
**[a]** Bilden einer Startstruktur, in der im wesentlichen sämtliche Basisobjekte des Systems eine unterste Hierarchieebene (0) darstellen und in der eine jeweils höhere Hierarchieebene (1 ... n) durch solche Objekte gebildet wird, die durch geeignete Gruppierung mehrerer Objekte der jeweils niedrigeren Hierarchieebene erhalten werden, wobei für jedes der Objekte eine anfängliche Eigenschaft und/oder eine anfängliche Randbedingung vorgegeben wird;
**[b1]** Berechnen der Wechselwirkungen und/oder Abhängigkeiten zwischen im wesentlichen allen Objekten in einer jeweiligen Gruppe unter Berücksichtigung der jeweiligen Randbedingungen;
**[b2]** Berechnen mindestens einer charakteristischen und/oder relevanten Eigenschaft jeder Gruppe aus den jeweils berechneten Wechselwirkungen/Abhängigkeiten unter Berücksichtigung der jeweiligen Randbedingungen, um dasjenige übergeordnete Objekt zu beschreiben, das die betreffende Gruppe repräsentiert ("Bündelung");
**[b3]** Berechnen von Randbedingungen für jedes Objekt einer Gruppe und seiner Wechselwirkungen/Abhängigkeiten aus den berechneten bzw. anfänglichen Eigenschaften des übergeordneten Objektes ("Kontexten"); und
**[c]** Iteratives Wiederholen der Schritte **[b1]** bis [b3], bis vorgegebene Kriterien erreicht werden, ggf. nach vorheriger Umstrukturierung der hierarchisch angeordneten Objekte.

2. Verfahren nach Anspruch 1, ***dadurch gekennzeichnet,* daß** im Schritt **[a]** so viele Hierarchieebenen gebildet werden, daß die oberste Ebene durch ein einziges Objekt repräsentiert wird.

3. Verfahren nach Anspruch 1 oder 2, **dadurch gekennzeichnet, daß** die Gruppierung im Schritt **[a]** mittels eines bestimmten Algorithmus erfolgt.

4. Verfahren nach Anspruch 3, ***dadurch gekennzeichnet,* daß** der verwendete Algorithmus fraktal ist und bei der Generierung der jeweiligen Gruppen auf ähnliche Weise eingesetzt wird.

5. Verfahren nach einem der Ansprüche 1 bis 4, ***dadurch gekennzeichnet,* daß** die Startstruktur im Schritt **[a]** gebildet wird, indem das zu berechnende komplexe System in Untergruppen zerlegt wird, die die zweit höchste Hierarchieebene bilden, wobei die so entstandenen Objekte wiederum in Untergruppen einer niedrigeren Hierarchieebene zerlegt werden, usw.

6. Verfahren nach einem der Ansprüche 1 bis 5, ***dadurch gekennzeichnet,* daß** bei der im Schritt **[b2]** durchgeführten Bündelung die charakteristischen und/oder relevanten Eigenschaft jeder Gruppe aus den jeweils berechneten Wechselwirkungen/Abhängigkeiten in aufsteigender Hierarchiereihenfolge mit einer fraktalen Vorgehensweise berechnet werden.

7. Verfahren nach Anspruch 6, ***dadurch gekennzeichnet,* daß** die Berechnung mittels eines fraktalen Algorithmus erfolgt.

8. Verfahren nach einem der Ansprüche 1 bis 7, ***dadurch gekennzeichnet,* daß** bei dem im Schritt **[b3]** durchgeführten Kontexten die Randbedingungen für jedes Objekt in absteigender Hierarchiereihenfolge mit einer fraktalen Vorgehensweise berechnet werden.

9. Verfahren nach einem der Ansprüche 1 bis 8, ***dadurch gekennzeichnet,* daß** bei dem im Schritt **[b3]** durchgeführten Kontexten die Randbedingungen für jedes Objekt berechnet werden, indem nach fraktalen Algorithmen aufgeteilt wird, z.B. indem in Unterthemen oder jeweils speziellere Randbedingungen zergliedert wird oder indem Ressourcen aufgeteilt oder verteilt werden.

10. Verfahren nach einem der Ansprüche 1 bis 9, ***dadurch gekennzeichnet,* daß** der Schritt **[b2]** des Bündelns vor dem Schritt **[b3]** des Kontextens durchgeführt wird.

11. Verfahren nach einem der Ansprüche 1 bis 9, ***dadurch gekennzeichnet,* daß** der Schritt **[b3]** des Kontextens vor dem Schritt **[b2]** des Bündelns durchgeführt wird.

12. Verfahren nach einem der Ansprüche 1 bis 11, ***dadurch gekennzeichnet,* daß** in den Schritten **[b1]** bis **[b3]** Algorithmen verwendet werden, die die Nachbarobjekte, die Unterobjekte und die Randbeziehungen der Objekte mit einbeziehen.

13. Verfahren nach Anspruch 12, ***dadurch gekennzeichnet,* daß** Planungs-, Vermehrungs-, Mutations-, Verformungs-, Gruppierungs- oder andere Algorithmen verwendet werden, die die jeweiligen Objekte verändern und dabei den Ist-Zustand, die Nachbarobjekte, den Kontext und/oder die Unterobjekte zugrunde legen.

14. Verfahren nach einem der Ansprüche 1 bis 13, ***dadurch gekennzeichnet,* daß** eine Objekterkennung in Form einer sich selbst optimierenden Simulation durchgeführt wird.

15. Verfahren nach Anspruch 14, ***dadurch gekennzeichnet,* daß** der Objekterkennung eine fraktal-hierarchische Bibliothek zugrunde gelegt wird.

16. Verfahren nach einem der Ansprüche 1 bis 15, ***dadurch gekennzeichnet,* daß** die Randbedingungen und Eigenschaften jeweils in interne und externe Randbedingungen bzw. Eigenschaften unterteilt werden.

17. Verfahren nach Anspruch 16, ***dadurch gekennzeichnet,* daß** die internen Eigenschaften aus dem internen Beziehungsnetzwerk der Unterobjekte mit deren Eigenschaften in einem internen Kontext berechnet werden.

18. Verfahren nach Anspruch 17, ***dadurch gekennzeichnet,* daß** der interne Kontext die Randbedingung für die internen Beziehungen der Unterobjekte darstellt und aus dem externen Kontext der Objekte und deren externen Eigenschaften berechnet wird.

19. Verfahren nach einem der Ansprüche 16 bis 18, ***dadurch gekennzeichnet,* daß** die externen Eigenschaften durch Bündeln im externen Kontext berechnet werden.

20. Verfahren nach Anspruch 19, ***dadurch gekennzeichnet,* daß** der externe Kontext die Randbedingung zur Berechnung der externen Eigenschaft (Bündelung) darstellt und aus dem internen Beziehungsnetz des Überobjektes und dessen internem 25 Kontext berechnet wird.

## Claims

1. A method for calculating and/or analysing and/or recognising objects of a complex system which consists of a multiplicity of basic objects having a relation of reciprocal effect and/or interdependency,
*comprising the following steps:*
**[a]** forming an initial structure wherein essentially all of the basic objects of the system represent a lowest hierarchy level (0) and wherein a respective higher hierarchy level (1 ... n) is formed by such objects which are obtained by suitable grouping of several objects of the respective lower hierarchy level, with an initial property and/or an initial boundary condition being predetermined for each of the objects;
**[b1]** calculating the interactions and/or dependencies between essentially all of the objects in a respective group by taking into consideration the respective boundary conditions;
**[b2]** calculating at least one characteristic and/or relevant property for each group based on the respective calculated interactions/dependencies while taking into consideration the respective boundary conditions in order to describe the one superordinate object which represents the respective group ("bunching");
**[b3]** calculating boundary conditions for each object of a group and its interactions/dependencies based on the calculated or initial properties of the superordinate object ("contexting"); and
**[c]** iterative repetition of steps **[b1]** to **[b3]** until predetermined criteria are obtained, optionally after re-structuring the hierarchically arranged objects beforehand.

2. The method according to claim 1, **characterised in that** in step **[a]** a suitable number of hierarchy levels is formed for the topmost level to be represented by a single object.

3. The method according to claim 1 or 2, **characterised in that** the grouping in step **[a]** is performed by means of a specific algorithm.

4. The method according to claim 3, **characterised in that** the employed algorithm is fractal and is employed in a similar manner for generating the respective groups.

5. The method according to one of claims 1 to 4, **characterised in that** the initial structure in step **[a]** is formed by splitting the complex system to be calculated into sub-groups forming the second highest hierarchy level, with the thus created objects in turn being split into sub-groups of a lower hierarchy level, and so on.

6. The method according to one of claims 1 to 5, **characterised in that** in the bunching performed in step **[b2],** the characteristic and/or relevant properties of each group are calculated based on the respective calculated interactions/dependencies in a rising order of hierarchy while proceeding in a fractal manner.

7. The method according to claim 6, **characterised in that** the calculation is carried out by means of a fractal algorithm.

8. The method according to one of claims 1 to 7, **characterised in that** in the contexting performed in step **[b3]**, the boundary conditions for each object are calculated in a descending order of hierarchy while proceeding in a fractal manner.

9. The method according to one of claims 1 to 8, **characterised in that** in the contexting performed in step **[b3]**, the boundary conditions for each object are calculated while splitting in accordance with fractal algorithms, e.g. by classifying into sub-topics or respective more specific boundary conditions, or by splitting or distributing resources.

10. The method according to one of claims 1 to 9, ***characterised in that*** step **[b2]** of bunching is performed prior to step **[b3]** of contexting.

11. The method according to one of claims 1 to 9, **characterised in that** step **[b3]** of contexting is performed prior to step **[b2]** of bunching.

12. The method according to one of claims 1 to 11, **characterised in that** in steps **[b1]** to **[b3]** algorithms are used which additionally include the neighboring objects, the sub-objects and the boundary relations of the objects.

13. The method according to claim 12, **characterised in that** planning, multiplication, mutation, deformation, grouping, or other algorithms are employed which modify the respective objects based on the current status, the neighboring objects, the context and/or the sub-objects.

14. The method according to one of claims 1 to 13, **characterised in that** object recognition having the form of a self-optimising simulation is performed.

15. The method according to claim 14, **characterised in that** object recognition is based on a fractal-hierarchical library.

16. The method according to one of claims 1 to 15, **characterised in that** the boundary conditions and properties are each classified into internal and external boundary conditions or properties.

17. The method according to claim 16, **characterised in that** the internal properties are calculated in an internal context from the internal relations network of the sub-objects with their properties.

18. The method according to claim 17, **characterised in that** the internal context constitutes the boundary condition for the internal relations of the sub-objects and is calculated from the external context of the objects and their external properties.

19. The method according to one of claims 16 to 18, **characterised in that** the external properties are calculated by bunching in the external context.

20. The method according to claim 19, **characterised in that** the external context constitutes the boundary condition for calculation of the external property (bunching) and is calculated from the internal relation network of the super-object and its internal context.

## Revendications

1. Procédé pour calculer et/ou analyser et/ou identifier des objets d'un système complexe, qui est constitué par une multiplicité d'objets de base, qui sont interactifs entre eux et/ou dépendent les uns des autres, qui comprend les étapes opératoires suivantes:
[a] formation d'une structure de départ, dans laquelle essentiellement tous les objets de base du système représentent un plan hiérarchique le plus bas (0) et dans laquelle un plan hiérarchique respectivement supérieur (1...n) est formé par des objets, qui sont obtenus par un regroupement approprié de plusieurs objets du plan hiérarchique respectivement inférieur, une propriété initiale et/ou une condition marginale initiale étant prédéterminées pour chacun des objets;
**[b1]** calcul des interactions et/ou des dépendances entre essentiellement tous les objets d'un groupe respectif en tenant compte des conditions marginales respectives;
**[b2]** calcul au moins d'une propriété caractéristique et/ou importante de chaque groupe à partir des interactions/dépendances respectivement calculées en tenant compte des conditions marginales respectives, pour décrire l'objet de rang supérieur, qui représente le groupe considéré ("focalisation"),
[b3] calcul de conditions marginales pour chaque objet d'un groupe et de ses interactions/dépendances à partir des propriétés calculées ou initiales de l'objet de rang supérieur ("formation de contexte"); et
[c] répétition itérative des étapes [b1] à [b3] jusqu'à ce que des critères prédéterminés soient satisfaits, éventuellement après restructuration préalable des objets disposés de façon hiérarchique.

2. Procédé selon la revendication 1, **caractérisé en ce que** lors de l'étape [a], on forme un nombre suffisamment élevé de plans hiérarchiques pour que le plan le plus élevé soit représenté par un seul objet.

3. Procédé selon la revendication 1 ou 2, **caractérisé en ce que** le regroupement lors de l'étape [a] s'effectue à l'aide d'un algorithme déterminé.

4. Procédé selon la revendication 3, **caractérisé en ce que** l'algorithme utilisé est fractal et est utilisé de façon similaire lors de la production des groupes respectifs.

5. Procédé selon l'une des revendications 1 à 4, **caractérisé en ce que** la structure de départ est formée lors de l'étape [a], par le fait que le système complexe à calculer est décomposé en sous-groupes, qui forment le plan hiérarchique le plus élevé en second, les objets ainsi obtenus étant à nouveau décomposés en sous-groupes d'un plan hiérarchique inférieur, etc.

6. Procédé selon l'une des revendications 1 à 5, **caractérisé en ce que** lors de la focalisation exécutée lors de l'étape [b2], les propriétés caractéristiques et/ou importantes de chaque groupe sont calculées à partir des interactions/dépendances respectivement calculées, dans une succession hiérarchique croissante avec un mode opératoire fractal.

7. Procédé selon la revendication 6, **caractérisé en ce que** le calcul s'effectue à l'aide d'un algorithme fractal.

8. Procédé selon l'une des revendications 1 à 7, **caractérisé en ce que** dans la formation de contexte exécutée lors de l'étape [b3], les conditions marginales pour chaque objet sont calculées selon une séquence hiérarchique décroissante avec un mode opératoire fractal.

9. Procédé selon l'une des revendications 1 à 8, **caractérisé en ce que** dans la formation de contexte exécutée lors de l'étape [b3], les conditions marginales pour chaque objet sont calculées, par le fait qu'une division est exécutée selon un algorithme fractal, par exemple par le fait qu'on opère une décomposition en thèmes secondaires ou selon des conditions marginales respectivement plus particulières ou par le fait qu'on divise ou on répartit des ressources.

10. Procédé selon l'une des revendications 1 à 9, **caractérisé en ce que** l'étape [b2] de focalisation est exécutée avant l'étape [b3] de formation de contexte.

11. Procédé selon l'une des revendications 1 à 9, **caractérisé en ce que** l'étape [b3] de la formation de contexte est exécutée avant l'étape [b2] de la focalisation.

12. Procédé selon l'une des revendications 1 à 11, **caractérisé en ce que** lors des étapes [b1] à [b3] on utilise des algorithmes qui incluent conjointement les objets voisins, les objets secondaires et les conditions marginales des objets.

13. Procédé selon la revendication 12, **caractérisé en ce qu'**on utilise des algorithmes de planification, de multiplication, de mutation, de déformation, de regroupement ou d'autres algorithmes, qui modifient les objets respectifs et prennent pour base l'état réel, les objets voisins, le contexte et/ou les objets secondaires.

14. Procédé selon l'une des revendications 1 à 13, **caractérisé en ce qu'**une identification d'objet est exécutée sous la forme d'une simulation qui réalise une optimisation automatique.

15. Procédé selon la revendication 14, **caractérisé en ce que** pour l'identification d'un objet on prend pour base une bibliothèque à hiérarchie fractale.

16. Procédé selon l'une des revendications 1 à 15, **caractérisé en ce que** les conditions marginales et les propriétés sont subdivisées respectivement en des conditions marginales internes et externes ou des propriétés internes et externes.

17. Procédé selon la revendication 16, **caractérisé en ce que** les propriétés internes sont calculées à partir du réseau interne de relations des objets secondaires avec leurs propriétés, dans un contexte interne.

18. Procédé selon la revendication 17, **caractérisé en ce que** le contexte interne représente la condition marginale pour les relations internes des objets secondaires et est calculé à partir du contexte externe des objets et de leurs propriétés externes.

19. Procédé selon l'une des revendications 16 à 18, **caractérisé en ce que** les caractéristiques et les propriétés externes sont calculées par focalisation dans le contexte externe.

20. Procédé selon la revendication 19, **caractérisé en ce que** le contexte externe représente la condition marginale pour le calcul de la propriété externe (focalisation) et est calculé à partir du réseau interne de relations de l'objet de rang supérieur et son contexte interne 25.
